(19) Europäisches Patentamt / European Patent Office / Office européen des brevets

(11) **EP 3 364 038 A2**

(12) **EUROPEAN PATENT APPLICATION**

(43) Date of publication:
**22.08.2018 Bulletin 2018/34**

(51) Int Cl.:
*F04D 17/10* (2006.01)   *F04D 17/16* (2006.01)
*F04D 25/08* (2006.01)   *F04D 29/28* (2006.01)
*F04D 29/42* (2006.01)   *F04D 25/06* (2006.01)
*F04D 29/02* (2006.01)   *H02K 1/02* (2006.01)
*H02K 1/27* (2006.01)

(21) Application number: **18157623.2**

(22) Date of filing: **20.02.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **20.02.2017 IT 201700018552**

(71) Applicant: **ELICA S.p.A.**
**60044 Fabriano (AN) (IT)**

(72) Inventor: **MACERA, Emidio**
**60044 Fabriano (AN) (IT)**

(74) Representative: **Leihkauf, Steffen Falk**
**Jacobacci & Partners S.p.A.**
**Via Senato, 8**
**20121 Milano (IT)**

(54) **RADIAL BLOWER FOR SUCTION HOODS**

(57)     A radial blower (1) comprises a housing (2) with an outlet opening (5) in tangential direction and at least one axial suction opening (3), a conveying group (6, 7) arranged inside the housing (2) and having an electric motor (6) and an impeller (7) connected to a rotor (9) of the electric motor (6), in which the rotor (9) comprises a circumferential wall (25) moulded from synthetic material mixed with particles of ferromagnetic material and magnetised with a HALBACH magnetic pattern with circumferentially alternating poles.

FIG. 3

## Description

The present invention relates to a radial blower, in particular for suction hoods, of the type comprising a housing with one or two axial air suction openings and a radial air outlet opening, as well as a conveying group with an electric motor and an impeller arranged inside the housing.

Radial blowers of the aforesaid type are known for example, from EP2365224.

The electric motor used for this type of blower should ensure a sufficient torque for conveying the air, an increased energy efficiency and a silent operation without undesired vibrations, such as to be accepted by the user in particular within the household realm. Moreover, the electric motor should be capable of operating at different speeds, which may be selected by the user.

Therefore, it is the object of the present invention to provide a radial blower of the aforesaid type, which is improved with reference to the above-listed features.

It is a particular object of the invention to provide an (electric motor for an) improved radial blower in terms of energy efficiency, which is less subjected to vibrations and noise and is structurally simplified.

These and other objects are achieved by a (motor for a) radial blower, in particular for suction hoods, having an impeller rotation axis and comprising:

**[0007]** - a housing with an air outlet opening in tangential direction, a first axial suction opening and, optionally, a second axial suction opening opposite the first suction opening,

**[0008]** - a conveying group arranged inside the housing and having an electric motor and an impeller connected to the rotor of the electric motor,

in which the rotor comprises a circumferential wall moulded from synthetic material mixed with particles of magnetisable material, e.g. ferrite, and magnetised with a HALBACH magnetic pattern with circumferentially alternating poles.

As the rotor is manufactured as a moulded body of synthetic material mixed with magnetic particles, the rotor may be made in a single piece with an increased dimensional accuracy and with a uniform and symmetrical distribution of mass about the axis of rotation. This reduces the occurrence of vibrations and noise and increases the energy efficiency of the motor and of the blower.

The magnetisation according to the HALBACH pattern obviates the need for an external iron ring, which otherwise is required to close the magnetic flow on the outer side of the rotor.

The configuration of the rotor also obviates the need to connect a plurality of separate permanent magnets, thus reducing the number of parts to be assembled and the manufacturing time and costs.

In order to better understand the invention and appreciate the advantages thereof, certain non-limiting embodiments are described below, with reference to the drawings, in which:

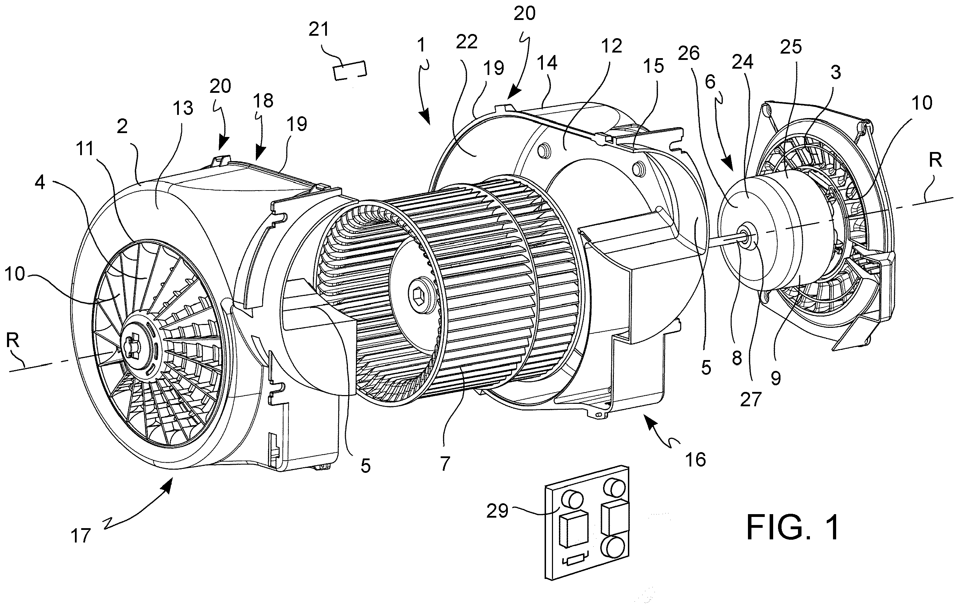

figure 1 is a perspective, exploded view of a radial blower according to the invention;

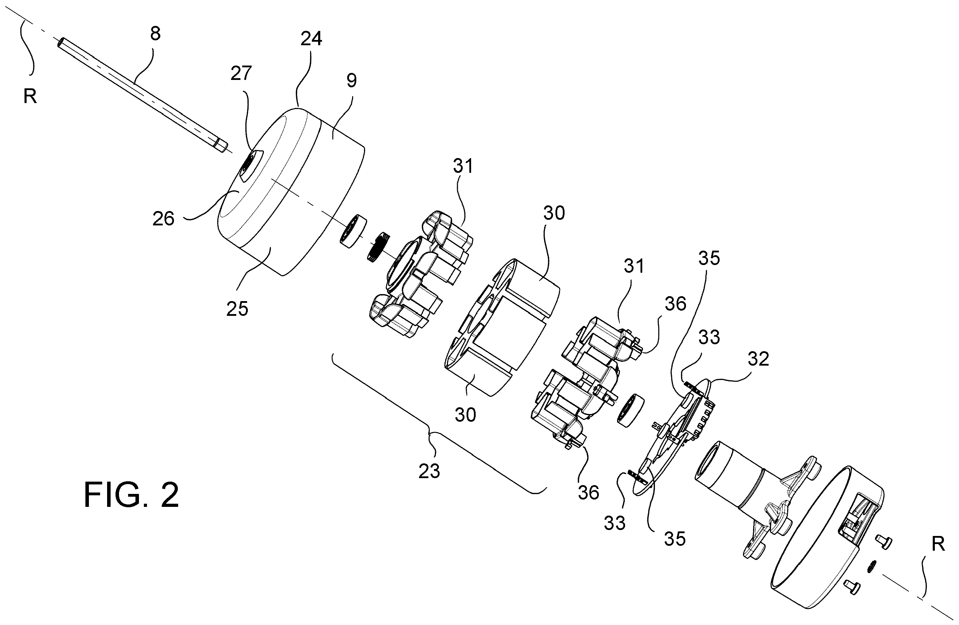

figure 2 is a perspective, exploded view of an electric motor for the radial blower according to the invention;

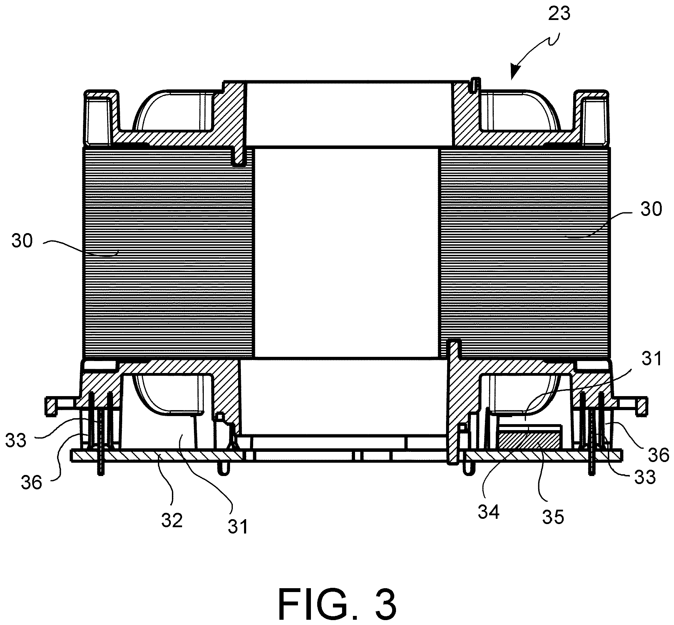

figure 3 is a radial sectional view of parts of the motor in figure 2;

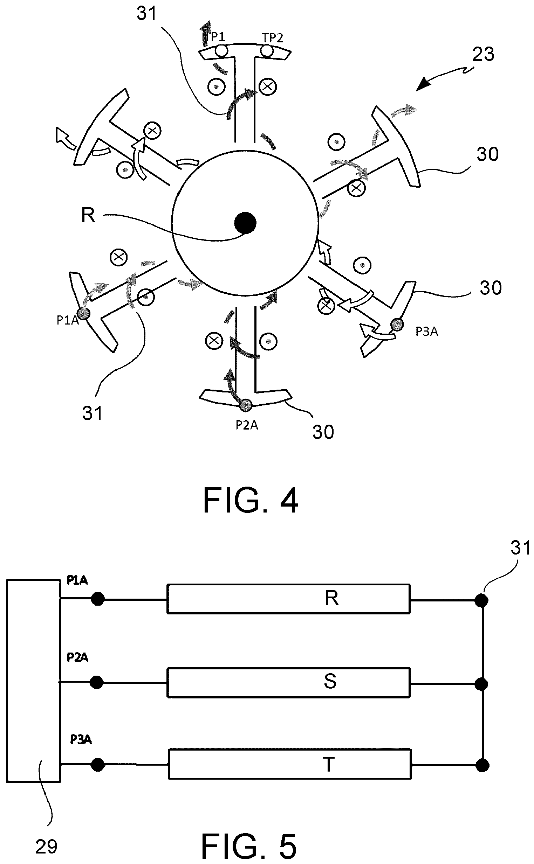

figure 4 shows a diagram of a stator with salient poles and of the stator winding;
figure 5 shows a connection diagram of the stator winding in figure 4;

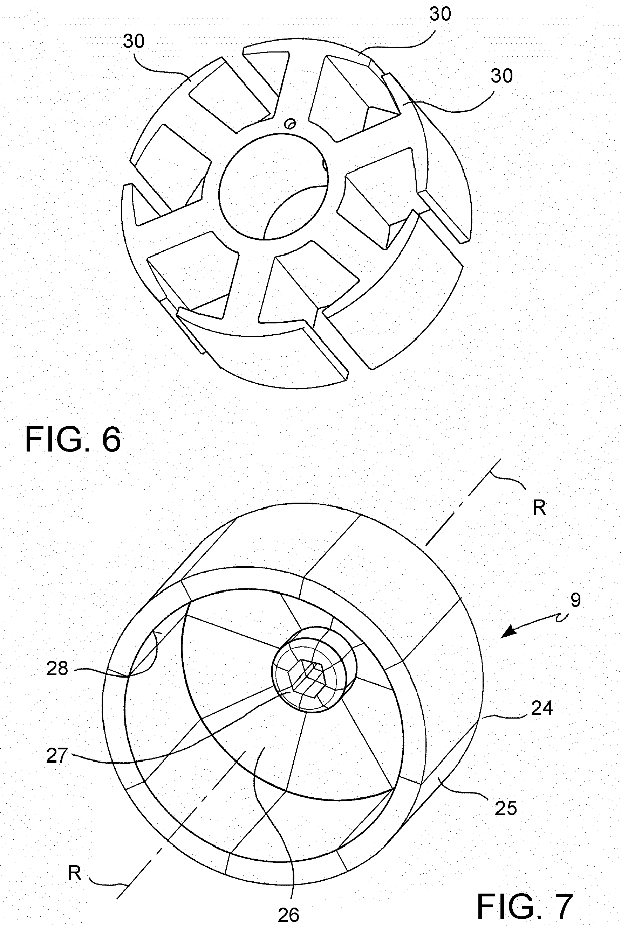

figure 6 is a diagrammatic view of a stator with six salient poles (winding removed) of the electric motor according to an embodiment;
figure 7 is a perspective view of a rotor with eight permanent magnetic poles of the electric motor according to an embodiment;
figure 8 shows the distribution of the permanent magnetic field as a function of the angular position at a median plane VIII-VIII of the rotor shown in figure 9.

With reference to the figures, a radial blower, in particular for household suction hoods, is indicated as a whole by numeral 1. Blower 1 defines a rotation axis R of the impeller and of the motor, and the "axial", "radial", "circumferential" and "peripheral" position or orientation definitions refer to the rotation axis R or to geometrical shapes developed about the rotation axis R. Moreover, within the present description, the expression "radially inwards" means "in an approaching manner to the rotation axis R" and the expression "radially outwards" means "moving away from the rotation axis R".

Blower 1 comprises a housing 2 with a first axial suction opening 3 and a second axial suction opening 4, opposite the first suction opening 3, and a radial or tangential air outlet opening 5, as well as a conveying group arranged inside housing 2 and having an electric motor 6 and an impeller 7 connected to a rotor 9 and/or a drive shaft 8 of the electric motor 6.

The electric motor 6 is fastened to housing 2 on two opposite sides or overhanging on one side alone and rotationally integral, for example by means of a plurality of support portions 10 protruding from an edge 11 of the first suction opening 3 and, in case of motor support on both sides, by means of a further plurality of support portions 10 protruding from an edge 11 of the second suction opening 4.

## Detailed description of housing 2

Housing 2 has a substantially toroidal shape with two side walls 12, 13 which delimit the suction openings 3, 4, and with a peripheral wall 14 and a substantially tangential portion 15 which forms the air outlet opening 5.

Housing 2 consists of two half-shells 16, 17 connected to each other along a joining line 18 in the peripheral wall 14 by means of complementary joining edges 19. The joining edges 19 may comprise flanges or joining protrusions 20 protruding radially outwards of housing 2 and having an undercut for housing one or more clips or joining profiles 21, in particular "Ω"- or "C"-shaped springs or couplers, or alternatively, holes for receiving connecting screws which block the two half-shells 16, 17 against each other.

Thereby, a simple, sturdy and particularly accurate assembly of the housing is obtained.

The suction openings 3, 4 preferably are substantially circular and coaxial with impeller 7, it also being circular.

Housing 2 internally delimits a circumferential conveying space 22 which gradually widens in radial direction from an initial region having minimum section up to a final region having maximum section.

**Description of the electric motor 6**

The electric motor 6 is a brushless three-phase synchronous motor with an inner stator 23 and an outer rotor 9.

Rotor 9 comprises a magnet-support body 24 with a moulded circumferential wall 25, preferably injection moulded, made of synthetic material, preferably made of plastic, for example PA12 ($-[NH(CH_2)_{11}CO]_n$, mixed with particles of magnetisable material, for example ferrite, preferably strontium ferrite ($SrO6Fe_2O_3$), and magnetised with a HALBACH magnetic pattern with circumferentially alternating poles.

In one embodiment, the circumferential wall 25 is magnetised at 8 poles, organized in 4 pole pairs, with Halbach orientation (which promotes a sinusoidal distribution of the air magnetic fields, making the motor easier to be controlled and promoting the reduction of the losses with resulting increase of the efficiency of the system).

As rotor 9 is manufactured as a moulded body made of synthetic material mixed with magnetic particles, rotor 9 may be made in a single piece with an increased dimensional accuracy and with a uniform and symmetrical distribution of mass about the axis of rotation R. This reduces the vibrations and noise and increases the energy efficiency of the motor and of the blower.

The magnetisation according to the HALBACH pattern obviates the need for an external iron ring, which otherwise is required to close the magnetic flow on the outer side of the rotor.

The configuration of rotor 9 also obviates the need to connect a plurality of distinct permanent magnets, thus reducing the number of parts to be assembled and the manufacturing times and costs.

According to one embodiment, the entire rotor 9 or the magnet-support body 24 alone has a shape which is rotationally symmetrical about the axis of rotation R, and the circumferential wall 25 preferably is a cylindrical wall concentric with the rotation axis R.

Advantageously, the entire rotor 9 or the magnet-support body 24 alone forms a cup shape with the circumferential wall 25 and with a bottom wall 26 preferably planar and orthogonal to the rotation axis R and which forms a hub 27 for the connection of rotor 9 to the drive shaft 8 or directly to impeller 7.

According to an embodiment, the circumferential wall 25 as well as the bottom wall 26, i.e. the entire magnet-support body 24, are continuous and do not have passage openings, with the exception of hub 27.

Alternatively, the circumferential wall 25 and/or the bottom wall 26 may form one or more through openings, for example to lighten rotor 9 or to allow an additional aeration of the inner stator 23.

Hub 27 may be made of plastic material or metal material, for example brass, and co-moulded with the magnet-support body 24. This further reduces the manufacturing costs and ensures an accurate centring of hub 27, and therefore of the drive shaft 8 about the remaining body of rotor 9. The co-moulding of hub 27 also ensures increased versatility for using the motor.

Moreover, with respect to a permanent fastening of rotor 9 with the drive shaft 8 (for example by means of co-moulding in order to reduce the use of metal material), the provision of the hub 27 adapted to removably fasten a shaft increases the versatility of use of rotor 9 and therefore, of the entire motor 6, with different fan shafts, impellers and housings.

The permanent magnetisation of the ferromagnetic material mixed with the plastic material of stator 9 may be performed in the circumferential wall 25 alone.

The permanent magnetisation of the ferromagnetic material mixed with the plastic material of stator 9 occurs after the moulding of the magnet-support body 24 and after the solidification of the plastic material.

According to a preferred embodiment, the circumferential wall 25 is magnetised according to a HALBACH pattern such as to strengthen the magnetic field along a radially inner face, while cancelling the magnetic field in the radially outer face of the circumferential wall 25 by interference.

Advantageously, the circumferential wall 25 is magnetised so as to obtain, along the radially inner face 28 thereof, a substantially sinusoidal intensity distribution of magnetic field as a function of the angle of rotation about the rotation axis R.

In a preferred embodiment, the circumferential wall 25 is magnetised with eight poles forming four pairs of opposite poles.

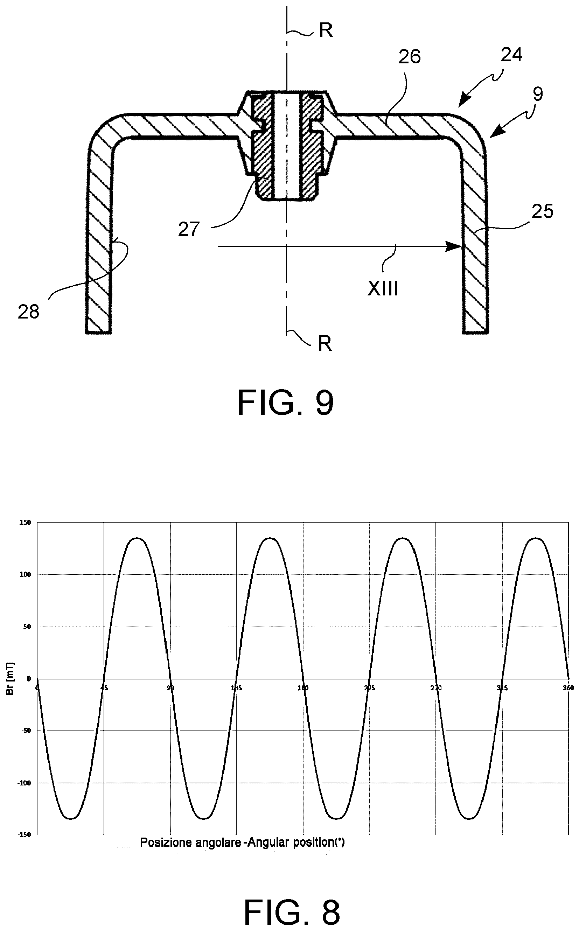

Figure 8 shows the distribution of the magnetic field along the radially inner face 28 in a median plane of the circumferential wall 25 according to one embodiment.

The normal (radial) component of the magnetic flux density (residual flux density) measurable on the radially inner face 28 of the circumferential wall 25 preferably is in the range delimited by the following values:

$$Br\_max = 135 \ [mT] \ (maximum \ field \ value)$$

$$Br\_min = 125 \; [mT] \; (minimum \; field \; value)$$

where Br is the maximum residual (or remanence) magnetic flux density expressed in [milliTesla] and has a sinusoidal distribution as shown in figure 8.

The magnetisation of the rotor with sinusoidal distribution facilitates the controlling of the motor, reduces the energy losses and increases the efficiency of the motor.

According to one embodiment, the inner stator 23 is a stator with salient poles 30, preferably with six poles 30 forming three pairs of two opposite poles and with three stator windings 31, one for each pair of opposite salient poles 30, possibly Y-connected, and with star point not grounded. The power supply of stator 23 is three-phase (R, S, T) and is provided by one or more inverters integrated in an electronic control board 29.

According to a further embodiment, the motor 6 comprises three thermal protectors 35 sensitive to the temperature of the stator windings 31 and directly integrated in (mounted on) a single protection electronic board 32 which also forms the electrical connections of the three thermal protectors 35 and which is positioned (preferably axially) against stator 23 with the three thermal protectors 35 resting in heat exchange contact with the stator windings 31.

The heat exchange contact may be a direct resting contact or a resting contact by means of the interposition of a heat-conducting layer 34, in both cases possibly with preloading, e.g. elastic preloading.

According to one embodiment, the protection electronic board 32 possibly is separate and spaced apart from the electronic control board 29 but is electrically connected thereto, and forms electrical lines for the power supply of the stator windings 31. These electrical lines end in quick-connect plugs 33 protruding from the protection board 32 in the same direction as the thermal protectors 35 and suitable for a purely mechanical, but with electrical contact, quick coupling with respective sockets 36 formed in stator 23 and connected to the stator windings 31.

Advantageously, the mechanical coupling of the plugs 33 with the sockets 36 also forms the, preferably only, mechanical fastening of the protection electronic board 32.

The protection electronic board 32 is configured to interrupt the power supply of motor 6 in the event of overheating and electric overcharge of the stator windings 31.

The electronic control board 29 is configured to control motor 6 without the need for sensors (e.g. Hall sensors) to the motor itself, rather by means of measuring the potential of return electromotive force (e.m.f.), expressed in volts, which is generated in the stator windings 31 when they cross the magnetic field lines.

As a whole, the invention allows to manufacture an electric motor and a blower which are energy-efficient, silent, have a reduced number of individual components - both movable and to be assembled - and also have a simplified structure as compared to the prior art and which are easy to assemble.

The invention independently relates both to blower 1 and motor 6.

**Claims**

1. Radial blower (1), in particular for suction hoods, having an impeller rotation axis (R) and comprising:

   - a housing (2) with an outlet opening (5) in tangential direction, a first axial suction opening (3) and, optionally, a second axial suction opening (4) opposite the first suction opening (3),
   - a conveying group (6, 7) arranged inside the housing (2) and having an electric motor (6) and an impeller (7) connected to a rotor (9) of the electric motor (6),

   wherein the rotor (9) comprises a circumferential wall (25) moulded from synthetic material mixed with particles of ferromagnetic material and magnetised with a HALBACH magnetic pattern with circumferentially alternating poles.

2. Radial blower (1) according to claim 1, wherein the electric motor (6) is a brushless three-phase synchronous motor with an internal stator (23) and external rotor (9).

3. Radial blower (1) according to one of the preceding claims, wherein the entire rotor (9) is injection-moulded in a single piece and has a shape which is rotationally symmetrical about the axis of rotation (R).

4. Radial blower (1) according to claim 3, wherein a bottom wall (26) of the rotor (9) is co-moulded with a drive shaft (8) or with a hub (27) for the connection of the rotor with a drive shaft (8).

5. Radial blower (1) according to one of the preceding claims, wherein the circumferential wall (25) has a magnetic field with sinusoidal distribution as a function of the angle of rotation around the rotation axis (R).

6. Radial blower (1) according to one of the preceding claims, wherein the circumferential wall (25) is magnetised with eight poles forming four pairs of opposite poles.

7. Radial blower (1) according to one of the preceding claims, wherein the normal component of the magnetic flux density on the radially inner face (28) of the circumferential wall (25) has a sinusoidal distribution.

8. Radial blower (1) according to one of the preceding claims, wherein the inner stator (23) is a stator with six salient poles (30) forming three pairs of opposite poles and with three stator windings (31), one for each pair of opposite salient poles (30) which are Y-connected, and with star point not grounded, the stator windings (31) being powered by three-phase current supplied by an electronic control board (29).

9. Radial blower (1) according to one of the preceding claims, wherein the motor (6) comprises thermal protectors (35) sensitive to the temperature of the stator windings (31) and directly integrated in a single protection electronic board (32) which also forms the electrical connections of the three thermal protectors (35) and which is positioned against the stator (23) with the thermal protectors (35) resting in heat exchange contact with the stator windings (31).

10. Radial blower (1) according to claim 9, wherein the thermal protectors (35) are resting against the stator windings (31) through the interposition of a heat-conducting layer (34) and/or with elastic preloading.

11. Radial blower (1) according to claim 9 or 10, wherein the protection electronic board (32):

   - is electrically connected to an electronic control board (29) distinct and spaced apart from the protection electronic board (32), and
   - forms electrical lines for the power supply of the stator windings (31),

   wherein said electrical lines end in quick-connect plugs (33), projecting from the protection board (32) and suitable for a quick coupling with respective sockets (36) formed in the stator (23) and connected to the stator windings (31).

12. Radial blower (1) according to claim 11, wherein the coupling of the plugs (33) with the sockets (36) achieves the only mechanical fastening of the protection electronic board.

FIG. 1

FIG. 2

# FIG. 3

FIG. 4

FIG. 5

30

30

30

30

FIG. 6

R

28

27

26

9

24

25

FIG. 7

FIG. 9

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2365224 A